(19) **Europäisches Patentamt / European Patent Office / Office européen des brevets**

(11) **EP 3 127 373 B1**

(12) # EUROPEAN PATENT SPECIFICATION

(45) Date of publication and mention
of the grant of the patent:
**18.03.2020   Bulletin 2020/12**

(21) Application number: **15713002.2**

(22) Date of filing: **20.03.2015**

(51) Int Cl.:
**H04W 48/18** (2009.01)      **G08B 25/00** (2006.01)

(86) International application number:
**PCT/GB2015/050822**

(87) International publication number:
**WO 2015/150731 (08.10.2015 Gazette 2015/40)**

(54) **ALARM DEVICE WIRELESS ROAMING**

DRAHTLOSES ROAMING FÜR ALARMVORRICHTUNG

ITINÉRANCE SANS FIL DE DISPOSITIF D'ALARME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2014   GB 201405866**

(43) Date of publication of application:
**08.02.2017   Bulletin 2017/06**

(73) Proprietor: **CSL (Dualcom) Limited
Harefield, Middlesex UB9 6NZ (GB)**

(72) Inventor: **CHANDORKAR, Santosh
Hillingdon
Middlesex UB10 9DY (GB)**

(74) Representative: **Howson, Richard Giles Bentham et al
Kilburn & Strode LLP
Lacon London
84 Theobalds Road
London WC1X 8NL (GB)**

(56) References cited:
**WO-A1-2011/078634      GB-A- 2 465 833
US-A1- 2010 173 628      US-A1- 2011 021 195**

**Description**

Technical Field

The present disclosure relates to a method and an apparatus for providing communication over a radio network, and to an alarm device arranged to communicate over a radio network. The present disclosure further relates to a method and apparatus providing communication over the Internet, and an alarm device arranged to communicate over the Internet. The present disclosure further relates to a polling server arranged to communicate with an alarm device via a radio network. The present disclosure further relates to a polling server arranged to communicate with an alarm device via the Internet.

Background

GB2465833 describes a method and apparatus for providing for communication over a public switched telephone network (PSTN), between an alarm device and a remote device such as an alarm gateway, polling server or alarm receiving centre. The alarm device is of the type which communicates using the dual tone multi-frequency fast format (DTMF FF) protocol. An interface device provides for such communication by communicating with the alarm device using a DTMF FF protocol, and communicating with the remote device using a modified DTMF FF protocol, so as to overcome problems when communicating over a PSTN telephone network.

WO2011/078634 describes an alarm system that can send an alarm event to four socalled alarm telephones, which in turn can forward the event to another four alarm telephones, generating a neighbourhood or family security network (SMSecurity Network) with other alarm telephones. The alarm telephone sends alarm events simultaneously using TCP/IP (Transmission Control Protocol/Internet Protocol), and ADSL (Asymmetric Digital Subscriber Line), and wirelessly using GSM/SMS/GPRS (Global System for Mobile / Short Message Service/ General Packet Radio Service) mobile telephone networks to monitoring stations and to the mobile telephones of users via SMS messages. The use of said transmission channels guarantees that the station is notified of the alarm event generated at the protected site. The alarm telephone can be self-monitoring, wherein users receive alarm events directly via SMS text messages on their mobile telephones. A user can interact with the alarm telephone via SMS text message, including arming, disarming, activating the siren, checking status, monitoring calls, etc. The system includes a function for audio alarm verification, wherein the user sends an SMS command to the alarm telephone in order for the latter to open the microphone, allowing the user to listen to what is happening at the place where the alarm was activated.

Alarm devices are used in domestic, commercial and other premises to signal an alert indicative of an alarm condition being met, such as, for example, a security device raising an alarm relating to an intruder entering the premises, or medical devices, such as dispersed alarms or personal communicators, in a hospital or residential care home raising an alarm relating to a patient leaving a ward or person pressing a help button. Upon such an alert being signalled, alarm devices send an alarm message to a remote location so that appropriate action can be taken. Some existing alarm devices are connected to and form part of an alarm network over which the alarm device can communicate with a remote location, such as an Alarm Receiving Centre (ARC). Some existing alarm devices use the Public Switched Telephone Network (PSTN) to send the alarm messages to the remote ARC which is connected to the alarm unit via the PSTN. The ARC then takes appropriate action, such as informing a predetermined responsible person, or the police, that an alarm message has been received. The cause of the alert can then be investigated.

Some alarm devices do not provide status information, that is information indicative of the state of operation (or inoperation) of the alarm device. An operator of the alarm network cannot then determine if these alarm devices are operating correctly.

In addition, in some situations, it is required to place alarm devices where it is not possible to access the PSTN. In some situations, it is required for alarm devices to be movable, for example an alarm device situated within a lift, or an alarm device fitted to a large piece of movable machinery such as a digger or dumper truck, or an alarm device that is positioned at different locations within a building.

Alternative techniques of communicating alarm messages from these alarm devices to the remote location are therefore needed. One option is to use a cellular telephone network. However, such networks are not sufficiently reliable for security applications such as those where it is imperative that there be a reliable connection between the device and the remote location for the transmission of alarm messages and other status information.

Embodiments of the present disclosure seek to address these problems.

Summary

An invention is defined in the appended claims.

Also disclosed herein is a method of operating an alarm device arranged to transmit an alarm signal indicative of an alarm condition having been met, the method comprising the steps of the device: accessing a record of a list of cellular networks available to the device for communication therewith, the record comprising information identifying each of the networks and a measure of the reliability of communication over each network; selecting a network with which to establish a communication link based on the measure of the reliability of communication over the network; and attempting to establish a communications link with the selected network.

The method may comprise a step of the device carrying out a survey of cellular networks available to the device communication therewith so as to populate the list with the information contained therein.

The survey may be carried out on power-up of the device, in response to a signal received at the device from a remote location, on a predetermined schedule or in response to a manual input at the device from a user.

The determining may be based on an updated measure of the reliability of communication over the network to which the device has established a communications link, the updated measure obtained during communication over that established link.

The determining may be based on determining that a predetermined number of updated measures are below the predetermined level.

The communication over the established link by which the updated measure is obtained may comprise the device sending a periodic polling signal from the device to a remote location and the device receiving from the remote location a handshake signal indicative of the polling signal having been received at the remote location.

The method may comprise, upon not receiving an expected handshake, ending the established link and selecting another network to connect to, that other network being the network for which the measure of the reliability of communication is the next highest.

The method may comprise, upon the device having established a communications link over a network that is not a predetermined preferred network, periodically ending that link and attempting to establish a link over the preferred network if the measure of reliability of communication over that preferred network is greater than a predetermined level.

After ending the link, the device may attempt to connect to the predetermined preferred network if the measure of reliability of communication over that preferred network is greater than a predetermined level.

The device may make no more than a predetermined number of repeated attempts to connect to the selected network if previous attempts to connect to the selected network fail. In an example there is provided a method comprising the subsequent step of selecting another network to connect to based on the measure of the reliability of communication over the network, and attempting to establish a communications link with that other selected network.

Upon ending a communications link over a network, the device may act on a signal that it is to be locked to a particular network by attempting to establish a communications link with that network and may not attempt to establish a communications link with another network at least until a contrary signal is received.

The device may comprise a Roaming SIM.

Also disclosed herein is an alarm device as defined in the any of the above methods.

In an example there is provided an alarm device arranged for coupling to an alarm signal generating device for receiving an alarm signal therefrom and for communicating the alarm signal over a cellular network with which the alarm device has established a communications link.

Also disclosed herein is a computer-readable media comprising code portions executable by processing means of an alarm device to cause that device to carry out a method according to any of the above methods.

Short Description of the Drawings

Specific embodiments of the disclosure are now described below by way of example only and with reference to the accompanying drawings. The specific embodiments are described with reference to an alarm device which in this embodiment is a burglar alarm fitted to domestic premises.

However, the skilled person will appreciate that the described embodiments are suitable for use as other types of alarm device, including medical alarm devices such as dispersed alarms, personal communicators, and indeed to any communication device that is to be used to raise an alarm, for example. A dispersed alarm is an alarm device that only requires power and a telephone line, removing the need for a fixed, hard-wired networked system. It is common in many sheltered or grouped housing scheme situations. The specific embodiments are shown, in which:

Figure 1a shows a schematic diagram of an alarm signalling system in which devices and methods of the present disclosure operate.

Figure 1b shows a schematic diagram of specific embodiments of devices and methods of the present disclosure, within the alarm signalling system as shown in figure 1.

Figure 2a shows a schematic diagram of a connection manager within the system shown in figure 1a and figure 1b.

Figure 2b shows a schematic diagram of a specific embodiment of a connection manager within the system shown in figure 1b.

Figure 3a shows a schematic diagram of a pulse manager within the system shown in figure 1a and figure 1b.

Figure 3b shows a schematic diagram of a specific embodiment of a pulse manager within the system shown in figure 1b.

Figure 4 shows a schematic diagram of an alarm device within the system shown in figure 1a and figure 1b.

Figure 5 shows the method steps associated with network connection within the system shown in figure 1b.

Figure 6 shows the method steps associated with connectivity and health check functionality within the system shown in figure 1b.

Figure 7 shows the method steps associated with determining network suitability within the system shown in figure 1b.

Figure 8 shows the method steps associated with network survey within the system shown in figure 1b.

Figure 9 shows the method steps associated with establishing a data connection within the system shown in figure 1b.

Figure 10 shows the method steps associated with carrying out a status handshake plus alarm delivery/transmission and the method steps associated with re-establishing data connection, within the system shown in figure 1b.

Figure 11 shows a table of exemplar RSSI values as a function of network connectivity.

Specific Description of Certain Exemplary Embodiments

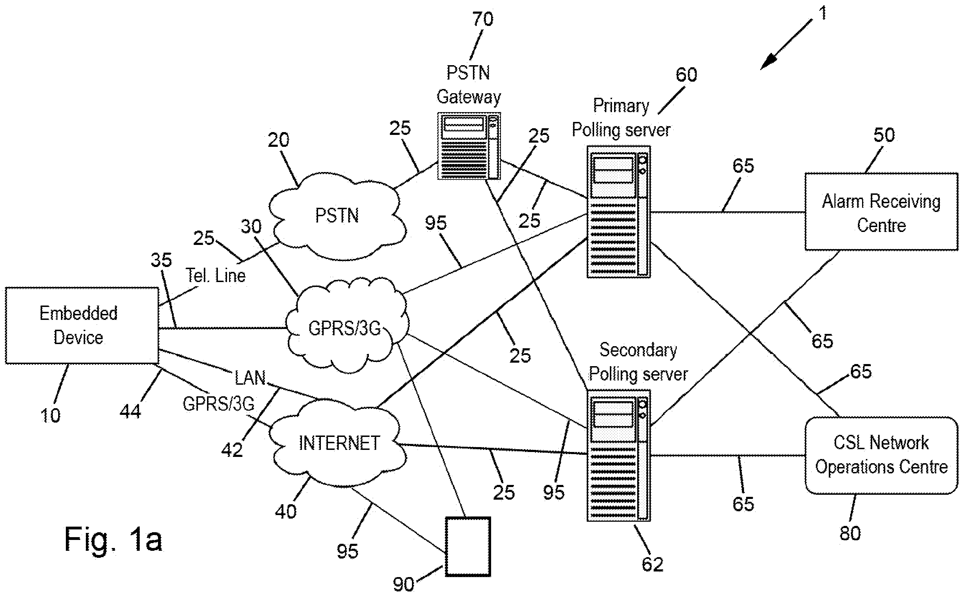

Figure 1a shows a schematic diagram of an alarm signalling system in which devices and methods of the present disclosure operate. In an embodiment of the present disclosure an alarm device (10) is arranged for operation in the alarm signalling system (1), and that makes use of the Internet (40). In a further embodiment of the present disclosure an alarm device (10) is arranged for operation in the alarm signalling system (1), and that makes use a radio network (30). In a further embodiment of the present disclosure an alarm device (10) is arranged for operation in the alarm signalling system (1), and that makes use of a Public Switched Telephone Network (PSTN) (20).

Within the alarm signalling system shown in figure 1a there are then a number of different routes that are used to connect to a polling server (60, 62), where the polling server (60, 62) is a server to which alarms, poll calls and meta-data are sent from the alarm device (10).

The routes that are utilised to connect to a server, from an embedded device, are as follows:

GPRS/3G/4G paths

1. Alarm device (10) -> GPRS/3G/4G - radio link (44) -> Internet (40) -> Polling Server (60, 62)
2. Alarm device (10) -> "Private APN" -> Polling server (60, 62)

An Access Point Name is the name of a gateway between a GPRS, 3G or 4G mobile device and another computer network or device, which can be the internet. A mobile device making a data connection is configured with an APN that is presented to a network operator and is used to determine what type of network connection should be created. The routes at points 1 and 2 are similar, except that for route 2 data transmitted from the alarm device (10), such as that sent from a SIM card, hit polling servers (60, 62) without hitting the internet (40). Private APN at point 2 is therefore represented in figure 1a by radio link (35) and radio network (30). However, in some embodiments radio link (44) constitutes radio link (35) and radio network (30).

Local Area Network (LAN) path
3. Alarm device (10) -> LAN (42) -> Internet (40) -> Polling server (60, 62).

PSTN path
4. Alarm device (10) -> PSTN network (20) -> Alarm gateway (70) -> Server (60, 62).

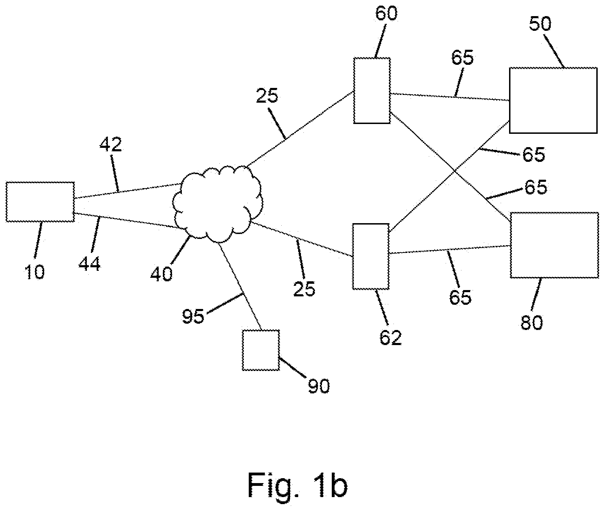

For simplicity, the alarm signalling system (1) shown in figure 1a will now be described with reference to the embodiment of the present disclosure that makes use of the Internet (40), which is shown in figure 1b. However, it will be understood that the embodiment shown in figure 1b comprises methods and devices which have applicability to the methods and devices of the other embodiments of the present disclosure as shown in figure 1a that make use of a radio network (30) without using the Internet (40), or at least part of a PSTN (20). Referring to figure 1a, the skilled person will appreciate that in specific embodiments the connection to the Internet (40) can be through a wireless connection, and therefore in such specific embodiments the alarm signalling system (1) also makes use of a radio network (30) to provide access to the Internet (40).

Referring to the embodiment shown in figure 1b, the alarm signalling system (1) further comprises an alarm receiving centre (ARC) (50), and an operations centre (80). In figure 1a only a single alarm device (10) and a single ARC (50) are shown, however it will be understood that such an alarm signalling system (1) could include any number of alarm devices (10) and could include more than one ARC (50).

Continuing with the embodiment shown in figure 1b, the alarm device (10) is arranged to send alarm messages indicative of an alarm alert at a user's premises (not shown) meaning that something has happened to trigger the alarm, at which the alarm device (10) is installed or positioned, to an ARC (50), via a communication connection provided by the Internet (40). The alarm device (10) can also be arranged to send alarm messages to an ARC (50) via the Private APN. The alarm device (10) is arranged to send and receive general packet radio service (GPRS) data via a 2G/3G/4G network operator, such as Vodafone UK, for transmission and receipt over the Internet (40). Such wireless communication to and from the alarm device (10) is hereafter termed "radio link (44)", and therefore as discussed previously the term radio link (44) includes the presence of a radio network (30), maintained by one or more network operators, to provide for connectivity to the Internet (40). However the skilled person would appreciate that other wireless communication can be utilised. For example, in other embodiments, the alarm device (10) is arranged to send and receive global system for mobile (GSM) data. In other embodiments, the alarm device (10) is arranged to send and receive data over a Local Area Network (42), such as a wide area network, either through wireless or wired communication.

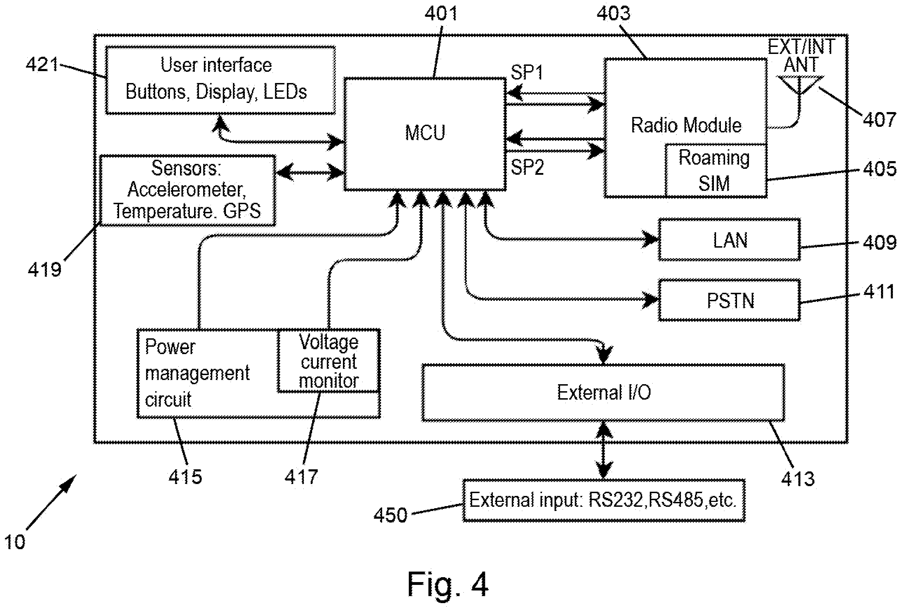

Continuing with the embodiment shown in figure 1b, the alarm device (10) operates as a stand-alone alarm device (10) meaning that it is a self-contained alarm device; however the alarm device (10) has an input/output interface (413) for connection to external peripherals (450), which includes a further alarm device (450) (interface (413) and peripherals (450) are not shown in figure 1b, but are shown in figure 4 discussed below). The further alarm device (450), to which the alarm device (10) is to be connected, for example could be an existing alarm system situated within a building, but which does not have the required communication functionality. For example, the further alarm device (450) could be situated such that it cannot access a PSTN, or the further alarm device (450) could be mounted on a moveable platform. Therefore, retrofitting the alarm device (10) to the further alarm device, enables alarm messages to be sent from the further alarm device (450) to an ARC (50) via a communication connection provided by the Internet (40). The connection between the alarm device (10) and the further alarm device (450) is by a short cable, of a metre or so in length, but in any case long enough to connect the two devices which are usually situated close to each other in a single room. The input/output interface (413) on the alarm device (10) is compatible with commonly used communication protocols as used by equipment, such as for example RS232, and RS485. Accordingly, in such a situation both the alarm device (10) and the further alarm device (450) are able to connect to and communicate over the Internet (40).

Continuing with the stand-alone alarm device (10) shown in figure 1b, the alarm device (10) has a suite of sensors (419) including a motion detector, an accelerometer, a temperature sensor, a smoke detector, a carbon monoxide detector and a GPS sensor (the suite of sensors (419) is not shown in figure 1b, but is shown in figure 4 discussed below). The suite of sensors (419) is used to determine if an alarm condition has been met, for example if movement has been detected, and/or for example that data has been collected indicative that a fire is in the vicinity. The skilled person will appreciate that changes in other physical phenomena can lead to an alarm condition being met, and that the sensor suite (419) can contain any appropriate sensor that can be used to determine when an alarm condition has been met. When the alarm condition has been met, the alarm device (10) is arranged to send an alarm message via the Internet to the ARC (50), where use is made of VPN IPSEC/Leased link and X.25 paths. VPN IPSEC is an encrypted private network, used to transmit encrypted data over the internet. Leased link is a dedicate phone line that has greater uptime and guaranty of connectivity. X.25 is a protocol suite used for wide area networks, it is the predecessor of IP, and some security infrastructures still use this communication path.

There is a need to periodically inform the ARC (50) that the alarm device (10) and its connection to the Internet are operating correctly. Such a periodic confirmation that the alarm device (10) is operating correctly and is properly connected to the Internet (40) is desirable since it is possible that an alarm device (10) could fail at any time for a number of reasons, such as, for example, the power being removed deliberately by a would-be intruder, a failure in the connection to the Internet (40), or simply due to a malfunction. However, there is also a need to separate a failure in the alarm device (10), such as malfunctioning of the alarm device (10), from a failure in the connection to the Internet (40). If the failure is in the communication with the Internet (40), not in the alarm device (10), there is a need to minimise the possibility of a false alarm being raised indicating that the alarm device (10) has failed. Such a false alarm can be expensive or inconvenient to deal with since it may involve for example the police being called. The methods and devices of the present disclosure provide a solution to this problem. In other embodiments, as would be appreciated by the skilled person, in both a security or telehealth scenario, the methods and devices of the present disclosure mitigates false alarms when short duration connectivity losses occur.

The alarm device (10) acts to generate information regarding alarms, device status and/or test messages relating to the alarm device (10). In an alternative embodiment, where the alarm device (10) is retrofitted to a further alarm device (450), the alarm device (10) is also arranged to receive information regarding alarms, status information regarding a further alarm device (450) and/or test messages from and relating to the further alarm device (450). The alarm device (10) additionally provides polling functionality enabling the generation and transmission of periodic 'heartbeats' and event driven data, as now discussed. Polling data can be used to determine data loss detection of the alarm device (10), and to determine the integrity of the connection to the Internet (40), for example when the alarm device (10) loses connectivity to the Internet (40), where connectivity loss is determined by counting the missed poll calls. After a certain number of missed poll calls the polling server (60) will generate an alarm to the ARC (50) indicating a "Poll fail". The way that the server is detecting the missed poll calls is by estimating the amount of polls expected from the alarm device (10) in a certain time span. The number of polls generated by the alarm device (10) in a certain time span, in other words the polling frequency, for security devices depends upon the grade of the unit. As the grade increases, from Level 0 to Level 4 relating to an increase in security requirements, there is an associated increase in the polling frequency. In some embodiments the increase in polling frequency is proportional to the grade of the unit (Level 0 to Level 4). In other embodiments, the skilled person will appreciate that other devices such as medical devices have different timings, or polling frequencies, dependent upon the specific requirements for the device. The polling server (60) also generates an alarm to the ARC (50) if a power outage is detected in a geographical area within which the alarm device (10) is located, which is determined either through an operator's input or from a determination that geographically neighbouring units are failing as discussed above with respect to determination of a "Poll fail" for the alarm device (10).

Continuing with the embodiment shown in figure 1b, appropriate information travels from the alarm device (10) to the Internet (40) via a radio link (44). The information travels through the Internet (40). The information emerging on the far side of the Internet (40) is sent via a telephone line (25) to a device directly connected to the telephone line (25) or to a device that is further downstream and can be connected via other transmission technologies. The device to which information is sent depends upon the final destination, as determined by the alarm device (10). The final destination can be one of a primary polling server (60) or secondary polling server (62), an alarm receiving centre (50) or an operations centre (80). This means that information emerging on the far side of the Internet (40) is sent via telephone line (25) to the primary polling server (60) as the final destination, or passes through the primary polling server (60) and is sent via an X.25 radio link (65) to the ARC (50) as the final destination, or passes through the primary polling server (60) and is sent via an X.25 radio link to the operations centre (80) as the final destination.

In the case of the ARC (50) being the destination for the information, and the information being an alarm message, the ARC (50) notes the alarm message and informs an appropriate responsible person who is then able to investigate the premises at which the alarm device (10) and alarm device is installed. In the case of the primary polling server (60) being the destination for the information, and the information being an alarm message, the primary polling server (60) forwards the information via the X.25 link (65) to the ARC (50). In the case of the operations centre (80) being the destination for the information, and information being an alarm message, the operations centre (80) forwards the information via an X.25 link (65) to the primary polling server (60) which then forwards the information via the X.25 link (65) to the ARC (50). In other embodiments the operations centre (80) is in direct communication contact with the ARC (50), and in other embodiments the operations centre (80) acts as an ARC and directly informs the appropriate responsible person. Continuing with the embodiment shown in figure 1b, even when the ARC (50) is not indicated as the final destination for the routed information, because the information is forwarded to the ARC (50), the ARC can still inform the appropriate responsible person in order that they may take action.

Each polling server (60, 62) is arranged to monitor for polling messages and infer a malfunction of the alarm device (10) and/or its radio link connection (44) to the Internet (40) if polling messages are not regularly received, and in this case to generate at least one "polling failure message". In some embodiments, each polling server (60, 62) may forward or send other types of messages in addition to or instead of polling failure messages, for example alarms.

Each polling server is connected to and arranged to generate and forward polling failure messages to the Internet (40) for delivery to a mobile telephone (90) of the user via radio link (95).

Each polling server is further arranged to generate and forward polling failure messages to the ARC (50), and/or to the operations centre (80) via the X.25 radio link (65).

Alarm messages that are destined for a user's mobile telephone are delivered over Internet Protocol to the polling server (60) and the polling server (60) uses the SMS infrastructure to deliver the message to the user's phone (90). This allows monitoring of the SMS status (failed, delivered, pending). In other embodiments, alarm messages are sent directly from the alarm device (10) to the user's mobile telephone (90) using the existing GSM SMS infrastructure, however monitoring of the SMS status is not as good as that provided when the alarm message is delivered via the polling server (60).

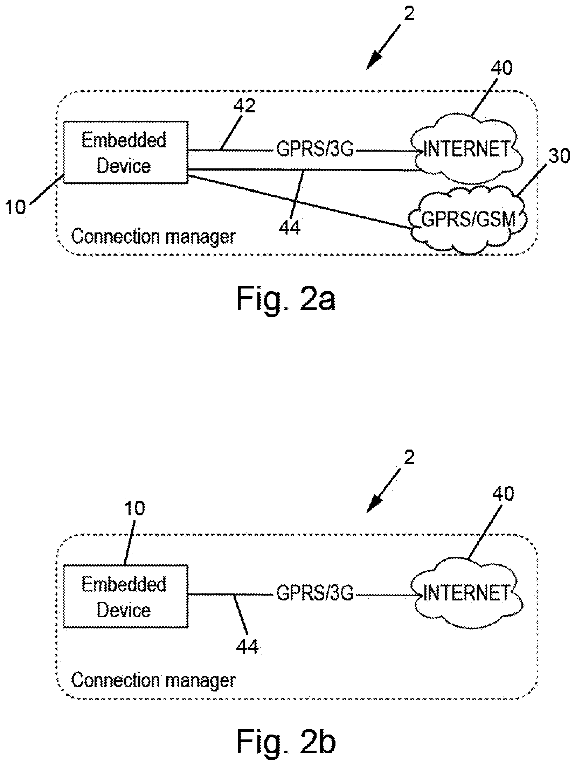

Figure 2a shows a schematic diagram of a connection manager (2) within the alarm signalling system (1) shown in figure 1a and figure 1b; as described below the connection manager is an algorithm stored in memory within the alarm device (10) and therefore the connection manager (2) is not physically as shown in figures 2a and 2b, with the connection manager (2) in figures 2a and 2b serving as a representation of the functionality of the connection manager (2) with respect to parts of the alarm signalling system. The connection manager (2) enables the reliable transmission and receipt of data between the alarm device (10) and the Internet (40). The connection manager (2) operates to ensure the integrity and optimal performance characteristics of the radio link connection (44) between the alarm device (10) and the Internet (40) across a radio network (30). In another embodiment the connection manager (2) operates to ensure the integrity and optimal performance characteristics of the LAN connection (42) between the alarm device (10) and the Internet (40). This can be understood through the examples discussed below.

For simplicity, the connection manager (2) shown in figure 2a will now be described with reference to the embodiment of the present disclosure that makes use of the Internet (40), which is shown in figure 2b. However, it will be understood that the embodiment shown in figure 2b comprises methods and devices which have applicability to the methods and devices of the other embodiments of the present disclosure as shown in figures 1a and 2a.

Referring to figure 2b, operation of the connection manager (2) will now be described with respect to the embodiment of the present disclosure wherein the alarm device (10) is connected to the Internet (40) via radio link (44). The connection manager (2) enables data to be reliably transmitted to and from the alarm device (10) and the Internet (40) via radio link (44), and as such the skilled person will understand the connection manager (2) enables the reliable transmission receipt of data over a cellular network (30) maintained by one or more network operators. The connection manager (2) provides the following functionality: enables alarm devices (10) to be deployed in any country, and connect to 'roam' across network providers as required; solves multilayer connectivity problems (steering, data registration, signal issues, bit error rate (BER), recovery from a station maintenance and jamming); avoids "aggressive behaviour" when there is a connectivity loss; provides objective criteria relating to the decision to roam to other networks (30); and the connection manager (2) itself provides for optimal tuning of its functionality.

The connection manager (2) enables the alarm device (10), that is connected to the Internet (40) via radio link (44) through a network operator such as Vodafone UK across radio network (30), to roam efficiently in order to deliver and receive data regardless of the country and network operators. The connection manager (2) enables the alarm device (10) to take advantage of a roaming Subscriber Identity Module (SIM) card, such as the Vodafone GDSP. A roaming SIM can be defined as for example a mobile phone SIM card that can operates on more than one network.

A problem exists in the way roaming automatically works, which is solved by methods and devices of the present disclosure. This problem, and its repercussions, are now discussed. A user typically will have an agreement with a particular home network operator. The home network operator will itself then typically maintain a list of network operators, who have a roaming agreement with the home network operator. The list of network operators is then prioritised to provide a preferred list of network operators, with the preferred list of network operators itself ordered on the basis of preference, such that if the connection with the home network fails, registration is attempted, and connection provided, with a network, in the order of the prioritised list of preferred network operators. This means that a network operator, that for example provides the strongest signal from available network operators in an area at a particular time, is unlikely to be chosen unless it is at the top or towards the top of the prioritised list of preferred network operators. Only when all the preferred operators are unavailable in a given area, for example when there is no coverage, is registration attempted, and connection provided, with the network operator providing the strongest signal from amongst the other network operators other than preferred network operators within the list of network operators. Automatic roaming, as discussed above, provided through for example an automatic operator selection algorithm (AT+COPS=0, where 'AT+COPS' is a set command that forces an attempt to select and register the GSM network operator and when set to '0' indicates that such selection is to be performed automatically), typically found in most mobile phones and radio modules, provides a viable solution for most non-critical applications, for example speech and web browsing.

However, for critical applications, as required within an alarm signalling system (1) or other security applications, where signal integrity is critical a solution is required to ensure signal and connectivity integrity. Limitations to be overcome, or at least mitigated, in relation to existing automatic roaming include:

- The preferred operator may not provide the best signal strength for a given area and a non-preferred operator may be the best alternative. A measure of signal strength with a radio network (30) is the Cell Signal Quality (CSQ). The CSQ represents an indication of the received signal strength (0-31) from the base station with the strongest signal on a particular network (30). A low CSQ introduces data communication and connection issues in both GSM data and GPRS data.

- The preferred operator may not provide a signal with the best signal-to-noise (S/N) for a given area, and a non-preferred operator may be the best alternative. A signal could have a relatively high CSQ but have a relatively low S/N, again introducing data communication connection issues in both GSM data and GPRS data.

- The preferred operator may not provide a signal with an acceptable bit error rate. In digital transmission, the number of bit errors is the number of received bits of a data stream over a communication channel that have been altered due to noise, interference, distortion or bit synchronization errors. The bit error rate (BER) is the number of bit errors divided by the total number of transferred bits during a time interval. BER is a therefore a performance measure, and can be used to determine the acceptability of a particular network as would be appreciated by the skilled person.

  ∘ The skilled person will appreciate that S/N and BER may not be very dependent upon the network provider. For example, a low or bad S/N or unacceptable or bad BER can also be caused by a big motor, generator or noisy power supply that could be located in particular buildings in the locality. Therefore, the skilled person will appreciate that it is possible that bad S/N or BER can be caused by the topology. For example, between the base station and the device there are buildings that are not present when connected to the base station of another network that is positioned at a different location.

• Base station maintenance or jamming often results in unexpected behaviour from the automatic selection algorithm. A mobile phone jammer is an instrument used to prevent a mobile device from communicating with base stations. It does so by communicating at the same frequency as the device, creating collisions that corrupt all communications.
• One attribute of a particular radio network (30) is the 'number of cells' within that network (30), where for example each cell could enable 15 regular link connections to the network (30), for example each cell enabling 15 cellular or mobile telephones to connect to the network (30). A network (30) with a low number of cells can therefore lead to connectivity problems during busy periods. The preferred operator may be an operator with a network (30) offering such a low number of cells, which can be problematic when it is critical to maintain integrity of connection as required for alarm systems.
• Automatic selection algorithms do not take pure roaming SIMs into account, where "pure roaming SIM" means a SIM that will always roam in the country that the device is deployed to.
• With automatic roaming, control is minimal for the host device, resulting in poor roaming performance, which is less tailored to the application.

These problems and limitations are solved by the methods and devices of the present disclosure, where the connection manager (2) enables: roaming across radio networks (30); connecting to network operators other than the preferred network operator(s) on a preferred network operators list; connection to network operators based on signal strength, communication success, signal-to-noise, cell number; user preference. Referring back to figure 2b, and with reference to figure 4 that shows the alarm device (10) in more detail, the alarm device (10) has a radio module (403) and associated roaming SIM (405), and the alarm device (10) has a radio antenna (407) connected to the radio module (403), for transmitting and receiving GPRS data. The alarm device (10) has a microcontroller (401) having memory (402) that includes flash memory and non-volatile memory. The microcontroller (401) is connected to the radio module (403) and processes data for transmission by the radio module (403) via the antenna (407), and processes data received by the radio module (403) via the antenna (407). The microcontroller (401) controls the radio module (403) in relation to such transmission and receipt of data, and the microcontroller (401) through the roaming SIM (405) within the radio module (403) controls the radio link (44). This means that the microcontroller (401) controls and determines which network (30) the alarm device (10) is connected, for the transmission and receipt of data over the Internet (40). The connection manager (2) is an algorithm held in memory (402), which when run on the microcontroller (401) enables the reliable transmission and receipt of data between the alarm device (10) and the Internet (40).

The radio module (403) has survey functionality provided by Telit Communications S.p.A although the skilled person will understand that survey functionality other than that provided by Telet can be used. Survey functionality is a diagnostic tool to provide information on the available radio networks (30) in the locality. The microcontroller (401) instructs the radio module (403) to carry out a survey. The radio module (403) via the antenna (407) scans the area and saves data from the survey in a network table (404), with the network table (404) and associated data is saved memory in (402). The following data from the survey is saved in the table (404): Cell ID; cell count; location area code (LAC); CSQ; and base station ID. (Here Cell ID is a generally unique number used to identify each Base transceiver station (BTS) or sector of a BTS within a Location area code (LAC) if not within a GSM network. Location area code (LAC) is a 16 bit number used as a unique reference for the location of a mobile subscriber within one GSM network. A mobile network code (MNC) is used in combination with a mobile country code (MCC) (also known as a "MCC / MNC tuple") to uniquely identify a mobile phone operator/carrier using for example the GSM/LTE, CDMA, iDEN, TETRA and UMTS public land mobile networks and some satellite mobile networks). In addition, T3212 data (relating to how often the alarm device (10) is required to perform a periodic location update procedure) is available from the survey and in some embodiments is saved in the table (404). For each available network (30) in the locality, the mobile country code (MCC), the mobile network codes (MNC), and the number of cells is also collected by the radio module (403) via the antenna (407) and saved in the network table (404). For each available network (30) in the locality, the microcontroller (401) instructs the radio module (403) and the roaming SIM (405) to connect to each network (30) in turn and instructs the radio module (403), via the antenna (407), to transmit a signal packet to the primary polling server (60) and in response the primary polling server (60) transmits a signal packet to the alarm device (10). The signal packet from the primary polling server (60) is received by the radio module (403) via the antenna (407), and the radio module (403) transmits the received data to the microcontroller (401). The microcontroller (401) analyses the received data, and determines a S/N ratio for the network. The S/N data across the networks (30) is also saved in the network table (404).

The process of acquiring data for populating the network table (404) is termed a 'network scan'.

Tuning parameters for the algorithm are also saved in the network table (404), such as 'Requested Network', maintained by the particular network operator for example Vodafone UK, to be used if a connection to that network is available. The requested network (34), is a radio network (30) to which the user of the alarm device (10) would prefer the alarm device (10) to be connected to if possible, for example the user may have consider that a particular network (30) provides a stable and robust network connection.

The information from the network scan, stored in the network table (404), provides the connection manager (2) with information regarding the radio network topology within which the alarm device (10) is situated. The connection manager (2), running on the microcontroller (401) as described above, is then able to make objective, assisted, and optimised roaming decisions, in terms of when a change in network (30) should be made and to what network (30) a connection should then be made.

The network table (404) contains the necessary details of the network operators identified during the network scan, and the network table (404) lists the details of up to 14 network operators. In other embodiments, the details of more or fewer network operators can be stored in the network table (404). The MCC and MNC uniquely identify a network (30) and are used to switch networks (30), through the connection manager (2) instructing the microcontroller (401), the radio module (403) and the roaming SIM (405) to register with and then connect to the required network (30), thereby providing the radio link (44) to the Internet (40).

When all the data has been acquired and saved in the network table (404), the network table (404) is populated with a list of available networks (30), in order of decreasing signal strength (CSQ) for each network (30). In other embodiments the populated list of available networks is ordered in terms of decreasing signal to noise, and in other embodiments the populated list of available networks is ordered in terms of cell number, or BER. If a Requested Network (30) has been indicated, this is placed at the top of the list.

Using the information in the network table (404), the connection manager (2) enables the alarm device (10) to make network jumps according to the best signal strength (CSQ), as described below. In other embodiments the network jumps can be made according to availability such as for example cell number, or according to signal to noise as discussed above. The skilled person will however appreciate the network table (404) can be ordered with respect to any of the data acquired across the networks (30), enabling network jumps to be made on the basis of that data.

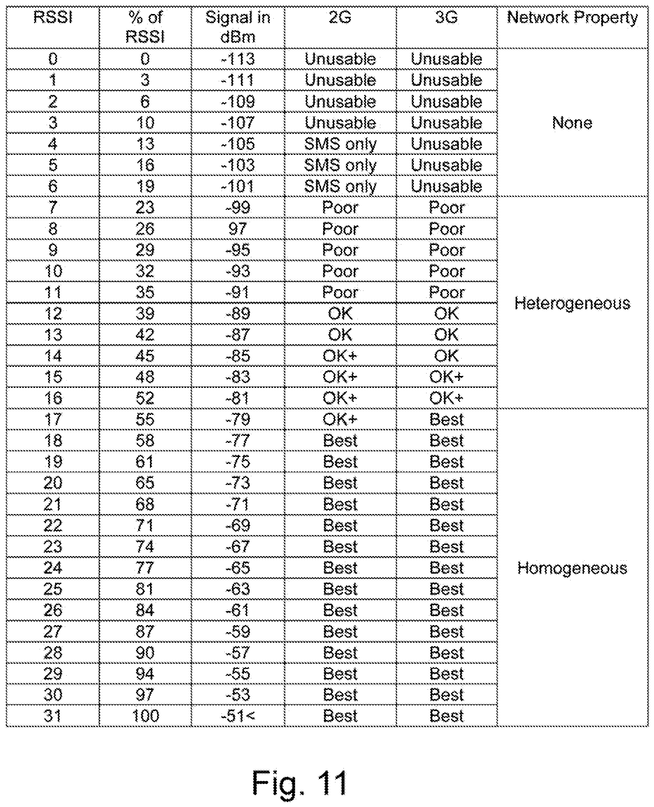

The survey, and the other processes used to populate a network table (404), is triggered by the connection manager (2) instructing the microcontroller (401), in combination with the radio module (403), as discussed above, when the alarm device (10) is first commissioned, for example when the alarm device is powered up. Continuing with the embodiment shown in figure 2b, a minimum CSQ value is determined depending upon a received signal strength indication (RSSI) as a function of network connectivity. Exemplar RSSI values as a function of network connectivity are shown in figure 11. Using the RSSI values as shown in figure 11, a minimum CSQ value is determined and when the signal strength falls below the minimum CSQ value the connection manager (2) determines that the alarm device (10) should change the network (30) to which it is connected using information within the network table (404).

When a Requested Network (34) has been indicated, although the alarm device (10) is connected to a different network (30) because the Requested Network (34) was not previously available, the connection manager (2) will attempt to periodically register and connect the alarm device (2) to the Requested Network (34) even when the current signal strength for the current network (31) is above the minimum CSQ value.

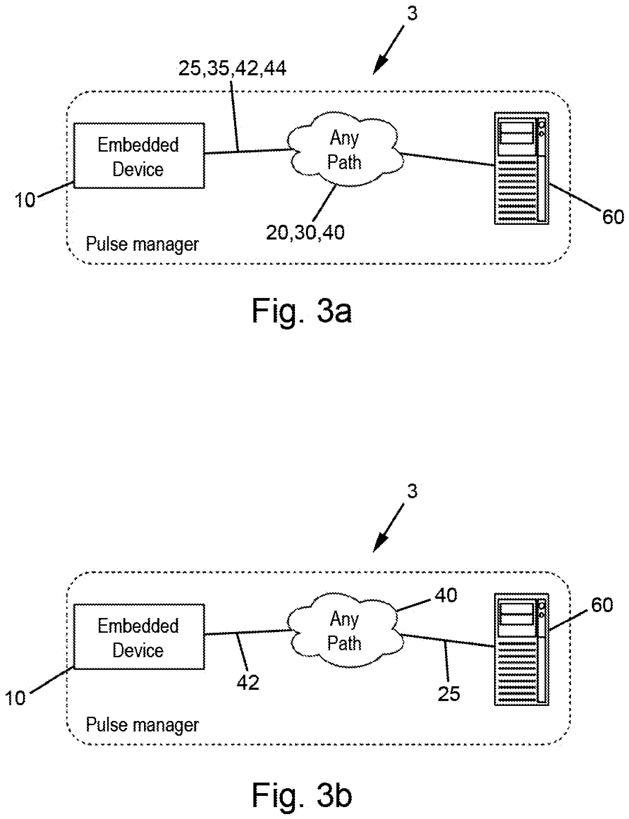

Referring to figure 3a, a pulse manager (3) is provided within the alarm signalling system (1) shown in figure 1a and figure 1b. The pulse manager (3) is an algorithm that is held in memory in the microcontroller (401) and the server. When used together they can detect issues with the communication channel. The pulse manager (401) is also used to pass, time or event driven information between the server and device. As discussed previously, the pulse manager (3) provides a flexible polling protocol that allows the alarm device (10) to send periodic heartbeats. These polling heartbeats when received by the primary polling server (60) leads to the primary polling server (60) sending a return pulse to the alarm device (10) as a 'handshake'. The handshake enables the alarm device (10) to determine that it is connected to the Internet (40) and in communication with the polling station (60). The handshake, from the return pulse, also enables the determination of a signal strength value associated with the radio link (44) that is used to provide the connection to the Internet (40). Furthermore, it will be understood that if the polling station (60) does not receive such periodic polling from the alarm device (10) a determination can be made to contact the responsible person who can take action if necessary.

For simplicity, the pulse manager (3) shown in figure 3a will now be described with reference to the embodiment of the present disclosure that makes use of the Internet (40), which is shown in figure 3b. However, it will be understood that the embodiment shown in figure 3b comprises methods and devices which have applicability to the methods and devices of the other embodiments of the present disclosure as shown in figure 3a.

Referring to figure 3b, the pulse manager (3) is an algorithm held in memory (402), which when run on the microcontroller (401) enables the transmission and receipt of polling data, and/or event data such as an alarm message, between the alarm device (10) and the primary polling server (60) across the Internet (40). The primary polling server (60) listens for incoming messages, performs an acknowledgement handshake wherein a return pulse signal is sent back to the alarm device (10), and processes the message accordingly. The skilled person will therefore clearly understand what 'polling' means, and why the pulse manager is used.

The types of messages that are sent from the alarm device (10) to the primary polling server (60) are one of the following:

- Alarm message (Security industry formats: SIA, contact-ID, Fast Format)
- Periodic poll C-Type (for example every 10 minutes)
- Event driven poll D-Type (for example battery low, device restart, path restore

Therefore two types of polling exist, the C-type, which occurs periodically, and the D-type which is triggered by the event.

The period between C-type polls is variable, depending upon the grade level and the current health status of the alarm device (10) in the field. Therefore, the alarm device (10) can have multiple polling rates, depending upon the situation. The alarm device (10) polls every 10 minutes and where there is a radio link (44) to the Internet (40) and onward connection by telephone line (25) to the primary polling server (60), and a handshake return pulse from the primary polling server (60) is received over the same route by the alarm device (10), the alarm device determines that it has a connection to the polling server (60). However, if the alarm device (10) does not receive a return handshake pulse from the primary polling server (60), the alarm device (10) determines that the path has failed. The alarm device (10) then sends heartbeat polls at an increased rate of one poll every two minutes over a secondary path, and these polls go either to the primary (60) or secondary polling server (62). The primary polling server (60) and the operations centre (80) are able to send messages to the alarm device (10) to increase the polling rate if necessary. In other embodiments, the alarm device (10) polls at a rate other than 10 minutes, for example at a rate below or above 10 minutes, and in other embodiments when the alarm device does not receive a return handshake it polls at an increased rate other than every two minutes, for example at a rate below or above two minutes.

C-type polls are divided into two types of formats. When polling at a high rate a C-type short format is used, containing only middle of information to identify the alarm device (10) but no other data. Polling at a low rate a JavaScript Object Notation (JSON) format is used, enabling more information to be transmitted relating to the status of the alarm device (10). In other embodiments, the formats such as TEXT are used.

For D-type polls the JSON data format is used to transmit the event related data, and in addition to providing information such as indication of a low battery D-type polls are used to update the alarm device (10) profile on the primary polling server (60), relating to signal strengths across networks (39), and sensor integrities within the alarm device (10). The D-type polls using the JSON protocol uses key-value notation delivery information (for example BAT:3.7, MCC:234, CSQ:17).

C-type polling from the alarm device (10) to the primary polling server (60), and the return handshake polls from the primary polling server (60) to the alarm device (10), in addition to enabling the determination relating to the integrity of the path, enables the determination of the CSQ values and S/N ratios as discussed above.

Returning to the connection manager (2) shown in figure 2b, the return handshake pulse from the primary polling server (60), received as a consequence of the alarm device (10) having sent out a C-type periodic heartbeat poll that was received by the primary polling server (60), therefore determines the CSQ values and is also used to determine the S/N and BER ratios. In other embodiments, CSQ can be determined without needing a preceding alarm transmission.

The return handshake pulse received by the alarm device (10) from the primary polling server (60) is termed a 'CSQ sampling'. Within the connection manager (2) a "CSQ count value" is assigned the number 3, and this is stored in memory (402). The CSQ count value is used to determine whether the alarm device (10) should disconnect from the network (30) to which it is connected and register and connect to a different network (30) to provide a new radio link (44) to the Internet (40). When 3 consecutive CSQ samplings are below the minimum CSQ level, that is when the number of CSQ samples below the minimum CSQ level equals CSQ count value, the connection manager (2) makes a 'jump away' decision and determines that a 'jump to' process to a new network (30) should be initiated. The connection manager (2) enables a user to indicate that they wish to lock to the requested network (34). If 'lock to requested network' option is selected, and at that time the alarm device (10) is connected to the requested network (34), then the CSQ value of CSQ samplings is ignored.

In addition to the connection manager (2) making a jump away decision based on 3 consecutive CSQ samples being below the minimum CSQ level, the connection manager (2) also makes the jump away decision in the following situations:

- During normal operation, the alarm device (10) is registered with a network (30) of a network operator via the roaming SIM (405) and if there is a loss of registration the connection manager (2) attempts to re-register with a network operator. Within the connection manager (2) a 'Reg Fail Count' value equal to 3 is stored in memory (402). When the number of registration queries with a network operator is greater than the Reg Fail Count value, i.e. equals 4, the connection manager (2) makes a jump away decision. A 'Reg Fail Count' value greater than 3 can be used, but this leads to modification of the way the connection manager (2) attempts to re-register so as not lead to the alarm device (10) from being barred from connecting to that network operator and indeed to other network operators, as discussed below in relation to mitigating aggressive behaviour.

- If in response to a C-type heartbeat poll from the alarm device (10) not leading to a return handshake signal pulse from the primary polling server (60), as discussed above the polling rate is increased. If there is no handshake signal pulse response to 3 consecutive heartbeat polls from the alarm device (10) to the primary polling server (60), the connection manager (2) makes a jump away decision.

- There are therefore two types of polling: "normal" polling; and "priority" polling. Normal polling is when the alarm device (10) is operating without there being a detected fault within the alarm signalling system, and priority polling is when the alarm device (10) has determined that there is a fault, for example that a path to a polling server has failed.

- If the "requested network (34)" and the "return to requested network after 48h" options have been indicated, and the alarm device (10) has not changed networks (30) for 48 hours, and the current network (31) is not the requested network (34), the connection manager (2) makes a jump away decision. It is to be noted that if a requested network (34) is specified, the alarm device (10) attempts to return to this requested network (34) on every other (network change - jump to) attempt.

Following a jump away decision having been made by the connection manager (2), the connection manager (2) makes a 'jump to' decision, where an objective decision is made based on the data contained within the network table (404) regarding which network (30) to jump to. The connection manager (2) applies the following procedures, in order of precedence:

1. If Lock to requested network is enabled, the alarm device (10) should switch to the requested network (34) and disable roaming, thus preventing any further network change attempts;

2. If the Requested Network (34) is enabled, every alternate attempt should be made to the Requested Network (34) (even while going through the network table, as described at point 3 below);

3. If none of the above is true then the alarm device (10) will attempt to use the Network Table (404). The table (404) is read from top to bottom, with entries relating to the highest to lowest signal strength of available networks (30); in other embodiments as discussed above entries are populated on the basis of other criteria such as BER for example. Only networks (30) with CSQ values above the Minimum CSQ value will be used. Attempts will be made to each valid network entry in the table in turn (except the current network (31)). When the last network entry has been attempted, the next attempt will be to the first network entry again. However, if the last network entry has been attempted and the alarm device (10) cannot establish a radio link (44) with the network (30) or a a network operator, the connection manager (2) undertakes another network scan in order to populate the network table (404) with updated network and network operator data.

As discussed at point 3 above, a network scan is performed during the jump to process when all the valid network table (404) entries have been attempted. In addition a network scan is performed at powering up of the alarm device (10). A network scan can also be performed manually by a user keying in an appropriate code into a keypad on user interface (421) on the alarm device (10); in addition to the data discussed previously that is entered in the network table (404) an operator ID is now stored within the network table (404). Furthermore, the network scan can be initiated via a remote command transmitted from the operations centre (80) to the alarm device (10). A network scan overwrites the contents of the network table (404) with the new data acquired during the network scan. A network scan is prevented from occurring within two minutes of initialising a radio module (403). In other embodiments, network scans are prevented from occurring within time scales either shorter than or greater than two minutes.

The connection manager (2), by making the jump away decision after four failed registration attempts to the current network (31) and by progressing through the network table (404) on the basis of priority, not only provides for an optimised radio link (44) to the Internet (40), but avoids what is termed 'aggressive behaviour'. Aggressive behaviour can be understood as follows:

In the event of a failure to connect to any radio-visible mobile network (30), it is important that a machine to machine (M2M) application does not repeatedly attempt to gain network (30) attachment and service access. Should a device repeatedly attempt to access mobile networks (30) when it is barred, most operators will block the device at the radio level and render it permanently useless.

The connection manager (2), mitigates such aggressive behaviour by the alarm device (10) by not repeatedly attempting to access mobile networks (30) in such a manner, and furthermore ensures the alarm device (10) does not attempt to access a radio network (30) at a time synchronised with the public clock trigger, so as to avoid attempting to connect at a time when a significant number of alarm devices within the coverage area of that network (30) are also trying to establish a connection which could lead to the network operator determining such access to be aggressive behaviour.

As discussed above, during normal operation, the connection manager (2) attempts to re-register with a network (30) if a connection is lost. Further information is provided on how the connection manager (2) does this in order to avoid such aggressive behaviour, as follows. When the alarm device (10) realises that a poll or an alarm call does not go through to its primary polling server (60) and secondary polling server (62), this indicates that the radio link (44) has failed and that there is no connection to the current network (31). First, the connection manager (2) attempts to reconnect with the current network (31). To understand what the connection manager (2) does we must introduce the packet data protocol (PDP) context as it applies in relation to the radio link (44) and the connection to the current (31) and/or a network (30). The PDP context is a data structure which contains session information relating to an active session with a network (30) operated by a network operator. Continuing with the embodiment shown in figure 2b, if the connection with the current network (31) has failed this means that the PDP context with the current network (31) is not activated or is in an idle or standby state.

The connection manager (2) first attempts to reconnect to the server. If that fails then the connection manager (2) attempts to activate the PDP context. If reactivation of the PDP context fails, the connection manager (2) will attempt to reactivate the PDP context a further four times with a time delay, before de-registering from the current network (31) by performing a "jump to decision" (1050). The number of PDP context activation attempts is set at a default of four where the time delay between each is set at a minimum time of one minute in order to mitigate what would be considered to be aggressive behaviour by the network operator. The number of PDP context activation attempts can be increased, however the time between attempts is increased again in order to mitigate aggressive behaviour. Numerous PDP context activation attempts in quick succession and/or numerous registration attempts in quick succession could be considered by the network operator to constitute aggressive behaviour and the connection manager (2) increases the time between attempts as the number of attempts increases in order to avoid such attempts being considered to be aggressive. The following tables provide information on the time used between PDP activation and reregistering attempts.

| PDP context activation attempt | Time interval |
| --- | --- |
| 1-4 | Greater than or equal to 1 minute |
| 5 | Greater than or equal to 15 minutes |
| 6 | Greater than or equal to 30 minutes |
| 7-N | Greater than or equal to one hour |

| Registration attempt | Time interval |
| --- | --- |
| 1-4 | Greater than or equal to 1 minute |
| 5 | Greater than or equal to 15 minutes |
| 6 | Greater than or equal to 30 minutes |
| 7-N | Greater than or equal to one hour |

If PDP context reactivation and registration fails, as discussed above, the connection manager (2) will make a jump away decision, followed by use of the network table (404) to make a jump to decision. If a connection cannot be provided to any of the networks (30) within the network table (404), including after a new network scan has been carried out to populate the network table (404) with updated network network operator topology data, the connection manager (2) will restart the radio module (403). After the start of the radio module (403), a new network scan is carried out after a period of time equal to or greater than two minutes from initialisation of the radio module (403). The connection manager (2), attempts to register and then PDP context activate with networks (30) using the data within the newly populated network table (404) as discussed above. If a radio link (44) to the Internet (40) cannot be established, the connection manager (2) will again restart the radio module (403) using time periods as shown in the table below, again to mitigate aggressive behaviour.

| Radio module (403) restart | Time interval |
|---|---|
| 1-4 | Greater than or equal to 5 minutes |
| 5-6 | Greater than or equal to30 minutes |
| 7-N | Greater than or equal to one hour |

When the network (30) of a particular network operator is unreliable, even though the signal strength is acceptable or even high, or if the alarm device (30) oscillates between different networks, or if there are particular network's to which the user does not wish to connect, the details of these network operators can be entered on a network blacklist, which is then stored in memory (402). The connection manager (2) will not attempt to connect to networks (30) if they are on the blacklist.

An embodiment of the alarm device (10) will now be described in more detail with reference to the schematic diagram shown in figure 4, where as described above in other embodiments the device can be a medical device, and in other embodiments the device is any communication device with a radio module and roaming SIM . Continuing with the embodiment shown in figure 4, the alarm device (10) has a microcontroller (401) with memory (402), radio module (403) with associated roaming SIM (405) with survey functionality, antenna (407) and suite of sensors (419) as discussed above.

The alarm device (10) is connected to an external power supply (not shown) at power supply port (not shown), and the power supply port is connected to power management circuit (415), with a power management circuit (415) has a voltage and current monitor (417). The power management circuit (415) is arranged to receive power from the power supply port and to provide a regulated power supply output which is connected to the remainder of the circuitry of the alarm device (10) so as to be able to supply power. The voltage and current monitor (417) is arranged to monitor the power supply voltage and provide an output which is connected to the microcontroller (201), capable of informing the microcontroller (201) if the power supply input Voltage is outside of a predetermined Voltage range. The alarm device (10) is arranged to operate from a 240V, 50Hz AC mains supply as found in the United Kingdom. In other embodiments, alarm device (10) is arranged to operate from a 230V, 50Hz AC mains supply, and in other embodiments the alarm device (10) is arranged to operate from a 230V, 60Hz AC mains supply, and in other embodiments the alarm device (10) is arranged to operate from a 120V, 60Hz AC mains supply. The skilled person will appreciate that the alarm device (10) can be arranged to operate from any appropriate worldwide mains electricity supply. In other embodiments, the alarm device (10) is arranged to operate from the DC voltage in the range of example 9 to 30 Volts, where for example in some of these embodiments the alarm device (10) when retrofitted to a further alarm device (450) is arranged to take its power from the further alarm device (450). In other embodiments, where for example the alarm device is retrofitted to a further alarm device, the alarm device is arranged to operate from a 5V DC power supply.

The power management circuit (415) regulates the incoming power supply Voltage and supplies power to the components, the voltage current monitor (417) monitors the external power supply AC Voltage and reports to the microcontroller if the power supply Voltage goes out of a defined range. Such "out of range" events are also recorded in the log stored in the microcontroller memory (403) and can selectively (based upon stored user preferences) initiate the sending of a message by the alarm device (10) to the ARC (50) or to the operations centre (80). In other embodiments, where the alarm device (10) is connected to and obtains its power from, a further alarm device (450), the voltage current monitor (417) monitors the external DC power supply.

The alarm device (10), has a user interface (421) connected to the microcontroller (401). The user interface (421) enables a user of the alarm device (10) to provide information to receive information from the alarm device (10). The user interface (421) has a keypad with buttons (not shown) by which a user can provide information to the alarm device (10). The user interface (421) has the LED display (not shown) by which information can be provided to the user. The user interface (421) has an LED light (not shown) to provide power integrity status to the user, with a red coloured indicating that the alarm device (10) is in a powered configuration, and a further LED light (not shown) to provide an alarm device (10) integrity status to the user, with a green coloured light indicating that the alarm device (10) is operational. Using the user interface (421) a user can manually connect to a network (30) of choice, through the LED display displaying the available networks (30), and the user then selecting from the list of available networks. The connection manager (2) the connects to that network (30) as discussed above. The skilled person will clearly understand that the user interface (421) depends upon the application for which the alarm device (10) is being used.

The alarm device (10) has communication interfacing components for interfacing the microcontroller (401), the connection manager (2), and the pulse manager (3) externally to the alarm device (10). The interfacing components are: a PSTN interface (411) used in conjunction with external input output (413) for establishing and communicating with and across a PSTN (20); a local area network (LAN) interface (409) used in conjunction with the radio module (403), or external input output (413), for establishing and can communicating with and across the Internet (40); and the radio module (407) used directly for establishing and communicating with and across the Internet (40), as discussed above. In other embodiments, the radio module (413) is used to establish a radio link (44) directly with the primary polling server (60) and a secondary polling server (62).

The alarm device (10) is constructed using known electronic device manufacturing techniques such as, for example, the use of printed circuit boards and moulded plastic cases and/or folded metal enclosures. The skilled reader will be familiar with such methods of construction and it is not necessary to elaborate further here. The power management circuit (415) and voltage current monitor (417) are implemented either using commonly known analogue or digital circuitry. For example, the voltage current monitor (417) makes us of one or more comparators, but in other embodiments may be implemented using one or more analogue to digital converters, the output of which would be fed to the microcontroller (401) and the detection performed by software running thereupon.

The systems shown in figure 1a and figure 1b are constructed using elements commonly in use, such as telephone lines (25), telephone exchanges (not shown), a PSTN (20), a radio network (30) (for example, a GPRS radio network, although other embodiments can use a GSM radio network) and existing ARCs (50). The primary polling server (60), secondary polling server (62) and alarm gateway (50) are constructed using standard server equipment in conjunction with standard interfaces to telephone lines, kilostream X.25 lines, and leased lines.

As discussed previously, the alarm device (10) can be provided with date information. Remote updating operates as follows. When the alarm device (10) receives an update instruction from a remote device (for example, from a polling server (60, 62), or from the ARC (50)) indicating that a remote update procedure should be carried out, the alarm device (10) closes the communication link with the remote device and then connects with the operations centre (80). The operations centre (80) is then able to update the contents of the alarm device (10) memory (402) by sending messages to the alarm device (10), and in this way the connection manager (2) and pulse manager (3) are also able to be updated, as well as new IP addresses of remote devices to which the alarm device (10) can connect to.

An admin call switch is located on the user interface (421) and by pressing this a user can cause the alarm device (10) to call the operations centre (80), if necessary For example if the user suspects that the alarm device (10) is not functioning correctly, by pressing the admin call switch the operations centre (80) in communication with the alarm device (10) can perform a diagnostic check of the alarm device (10).

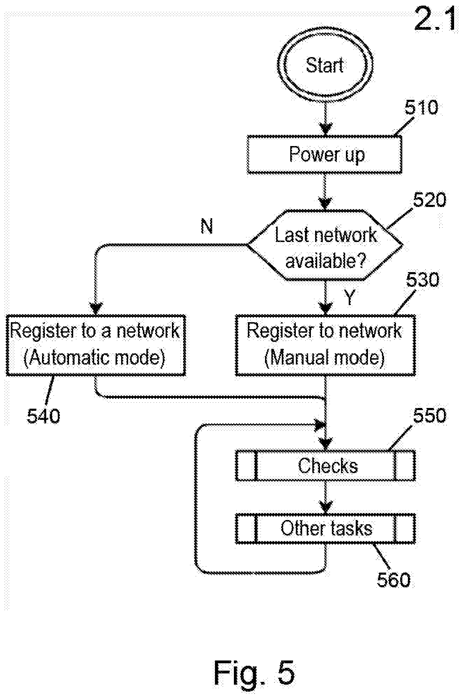

Methods and devices of the embodiments of the present disclosure will now be described with reference to figures 5 to 10, which show different aspects of operation of embodiments of the present disclosure. The skilled person will appreciate that such methods include the use of software or computer program(s) running within an appropriate microcontroller, used to control devices in order to provide the described aspects of operation.

Figure 5 shows the method steps associated with network connection within the system shown in figure 1b. The process steps shown in figure 5 constitute a 'master loop' carried out by the connection manager (2). In summary, the processes within figure 5 are:

1. Radio module initialisation
2. Initial registration (manual or automatic)
3. Connectivity call and health check functions
4. Other device related housekeeping (e.g. updating, alarm capture)

Referring to figure 5, at step (510) the alarm device (10) is powered up, and at step (520) the connection manager (2) determines if the last network (30) to which the alarm device (10) was connected is available. If the last network (30) is available, this information is provided on the user interface (421), and if the user chooses to connect to this network (30) a press an associated button on the keypad of the user interface (421) and the connection manager (2) 'manually' connects to this network (30) which occurs at step (530). The process then moves to step (550). If at step (520) the last network is not available, or if the user does not wish to connect to the last network that was available, the process moves to step (540). At step (540) the connection manager (2) uses the network table (404) to connect to a network (30) as discussed above. The process and move step (550). At step (550) and step (560) the alarm device (10) undertakes an integrity check, and if necessary transmits a D-type message to the operations centre (80).

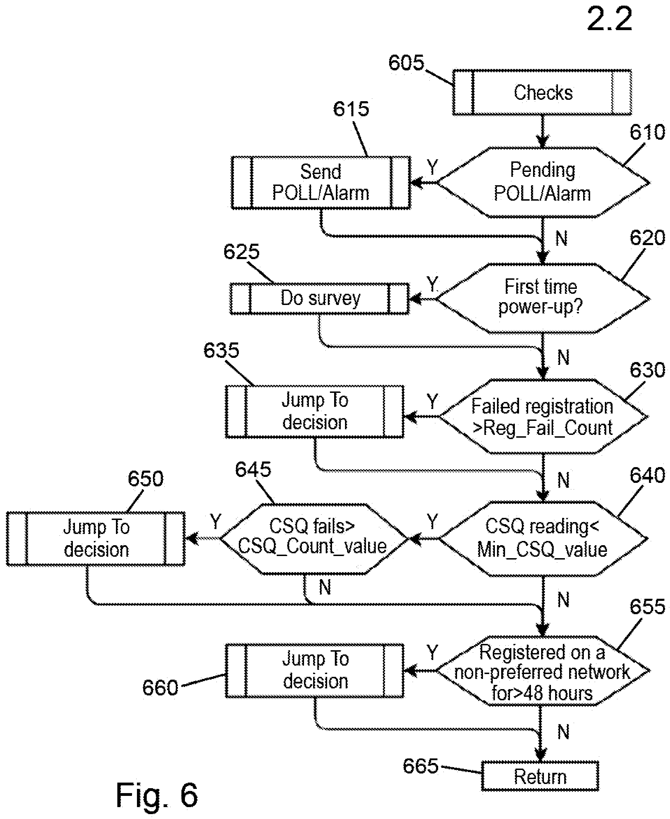

Figure 6 shows the method steps associated with connectivity and health check functionality within the system shown in figure 1b. In summary, the processes within figure 6 are:

1. Alarm/Poll handling
2. First time power-up survey check
3. Failed registration count - How many times registration fails before roaming
4. Failed CSQ value and count - If the CSQ value is below the specified minimum for N times, the unit will roam
5. Requested network - If the "requested network" is specified and the "return after 48h" is selected, the alarm device (10) will roam, after being on a non-preferred network for >48h.

Referring to figure 6, the process starts at step (605), which is the same as step (550) as shown to the figure 5 where integrity status checks are made, and then the process moves to step (610). At step (610) connection manager (2) determines if a C-type poll signal pulse and/or a D-type alarm signal is to be transmitted. If not, the process moves to step (620). If yes, the process moves to step (615) where the microcontroller (401) instructs the radio module (403) to send the necessary data, and the process moves to step (620). At step (620) the connection manager (2) determines if the alarm device (10) or radio module (403) has just powered up, and if not the process moves to step (630). If yes, the connection manager (2) carries out a network scan, and populates the network table (404), and the process moves step (630). At step (630) to connection manager (2) determines if the number of registration queries equals Reg Fail Count, and if not the process moves to step (640). If yes, the process moves to step (635) where the connection manager (2) makes a jump to decision and goes through the process of connecting to network (30), and the process moves step (640). At step (640) the connection manager (2) determines if the CSQ sample is less than the minimum CSQ value. If no, the process moves to step (655). If yes, the process moves step (645) where it is determined if the number of consecutive CSQ samples, below the minimum CSQ level, equals CSQ count value. If no the process moves to step (655). If yes, the process moves to step (650) where a jump to decision is made in order to roam to a new network (30) using the network table (404), following which the process moves to step (655). At step (655) it is determined if a requested network (34) has been indicated and the return after 48 hours option has been selected, and if so that the alarm device (10) has been registered on a network (30) other than the requested network (34) for a length of time greater than 48 hours. If no, the process moves to step (665). If yes, the process moves to step (660) where a jump to decision is made, following which the process moves to step (665) at which point the process returns back in the main loop. From there step (550/605) is called again following some housekeeping - step (560).

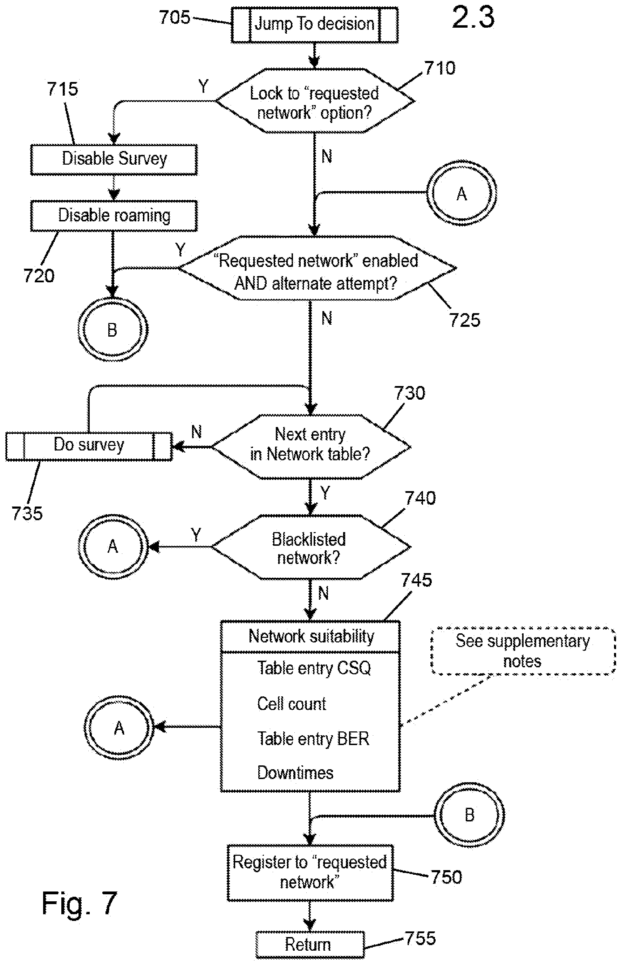

Figure 7 shows the method steps associated with determining network suitability within the system shown in figure 1b. In summary, the processes within figure 7, constitute the 'jump to' decision, and are:

The "jump to decision" process assesses the suitability of the network (30) that the alarm device (10) is about to roam to. The following factors are taken into account:

1. "Lock to requested network" option enabled
2. "Requested network specified/selected" (Registration to this network is attempted every other attempt)
3. Current network evaluated is in blacklist
4. Decision based on CSQ, Cells, BER - sorting of the table can vary

    a. Pure CSQ decision. The table is sorted by highest CSQ
    b. $CSQ \times K_{csq} + Cell \times K_{cell} + BER \times K_{ber}$ $K_{csq}$, $K_{cell}$, and $K_{ber}$ are coefficients, also called weights, associated with the parameters *CSQ*, *Cell*, and *BER* respectively.
    c. Dynamic threshold adjustment (when end of table is reached threshold is reduced)
    d. Downtime

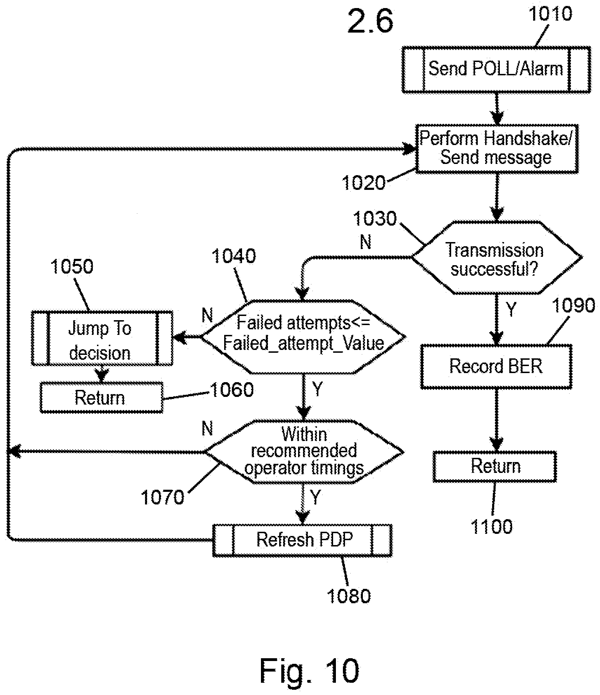

Referring to figure 7, the process starts at step (705) which relates to the 'jump to' decision process steps. Therefore steps (705) and the following steps as shown in figure 7, constitute what occurs at steps 635, 650, 660 as shown in figure 6, and step 1050 to be discussed below with regards to figure 10. At step (710) it is determined if 'lock to requested network (34)' has been indicated. If yes, the process moves to step (715) with the network scan functionality being disabled, following which at step (720) the connection manager (2) disables the ability the alarm device (10) to roam across networks (30). The process then moves to step (750) discussed below. If at step (710) it was determined that the lock to option had not been indicated, the process moves to step (725). At step (725) it is determined if a requested network (34) has been indicated, and if so whether this registration attempt constitutes the 'alternate' attempt when registration with the requested network (34) is attempted to be carried out. If yes, the process moves to step (750) as discussed below. If no the process moves to step (730) where it is determined if there are any more network (30) entries within the network table (404) to be assessed. If no, this means that the last network (30) evaluated was the bottommost valid network (30) with the network table (404), and the process moves to step (735) where a new network scan is carried, after which the process returns to step (730). If at previous step (730) the bottommost valid network (30) within the network table (404) had not been reached the process moves to step (740). At step (740) the next valid network (30) is assessed to determine if it is on the blacklist and if so the process returns to step (725). If the next valid network (30) is not on the blacklist, the process moves to step (745). At step (745), the network table (404) has been sorted on the basis of CSQ and as such, if the currently assessed network has an acceptable CSQ value above the minimum CSQ value, registration to this network will be attempted - this introduced at point 4a above. If registration is successful the process stops, but if registration is not successful the process moves a step (725). In other embodiments, sorting of the network table (404) is on the basis of S/N or BER or cell number, for example.

In another embodiment, introduced at point 4b above, the network table (404) is sorted on the basis CSQ, and cell number (Cell), and BER, where for each network (30) of the network operator a figure of merit is assigned to that network using $K_{csq}$, $K_{cell}$, and $K_{ber}$ coefficients associated with CSQ, cell number (Cell), and BER respectively as shown above at point 4b. The $K_{csq}$, $K_{cell}$, and $K_{ber}$ coefficients are user defined and input into the alarm device (10) by the keypad the user interface (421) or are provided remotely from the operations centre (80). In another embodiment, introduced at point 4c above, if the end of the network table (404) is reached and no networks were found to have a CSQ value above the minimum CSQ value a dynamic threshold adjustment is applied, in order that after the next network scan used to populate the network table (404), there will be a greater chance of a successful radio link (44) being established. In a further embodiment, introduced at point 4d, the networks (30) within the network table (404) are sorted on the basis of the percentage of time that those networks are unavailable, i.e. are sorted the basis of downtime. Step (750) the connection manager (2) registers to the requested network (34), after which the process moves to step (755) where the process ends.

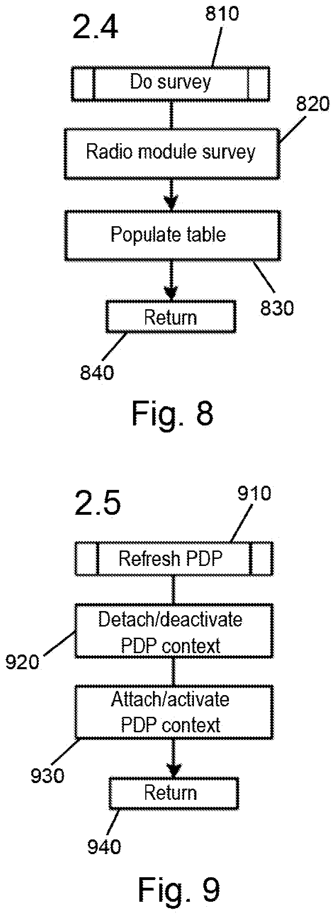

Figure 8 shows the method steps associated with network survey within the system shown in figure 1b. In summary, the processes within figure 8, constitute a survey and band channel scan (network scan). To recall a survey is triggered by the alarm device (10) microcontroller (401) when the alarm device (10) is first commissioned and when the network table (404) is exhausted. The host microcontroller (401) instructs the radio module (403) to scan the area and save all the useful data such as Cell id, cell count, LAC (location area code), CSQ, base-station ID, etc. All this information is placed in the network table (404), saved in the non-volatile memory (402), that is used when switching networks.

Referring to the figure 8, the process starts at step (810), which corresponds to step (625) in figure 6 and step (735) in figure 7, and moves to step (820). At step (820) the network scan as discussed above is carried out, and at step (830) network table (404) is populated, after which step (840) the process ends.

Figure 9 shows the method steps associated with establishing a data connection within the system shown in figure 1b. In summary, the processes within figure 9, constitute PDP - data connectivity processes performed by the connection manager (2). To recall, after registering to a network (30), the alarm device (10) needs to establish a data connection by attaching and activating the PDP context. This then enables the alarm device (10) to get IP connectivity and communicate with the outside world. Occasionally the network operator will place the alarm device (10) into a stand-by or an idle state. While there, the alarm device (10) might not be able to signal-out. To bring the alarm device (10) back into the ready state, the alarm device (10) needs to refresh its PDP by either completely detaching or by attempting to connect with the polling server (60) via radio link (44) and the Internet (40) across network (30). Care must be taken when refreshing the PDP since the SIM might be flagged as aggressive and completely blocked. The connection manager (2) ensures that this does not happen.

Referring to figure 9, at step (910) refresh PDP process starts, where it step (920) the connection manager (2) detaches and deactivates the PDP context as discussed above. Following which, at step (930), the connection manager (2) attaches and activates the PDP context, after which step (940) the process ends.

Figure 10 shows the method steps associated with carrying out a status handshake and the method steps associated with re-establishing data connection, within the system shown in figure 1b. In summary, the processes within figure 10, constitute poll and alarm transmission. To recall, when a pending transmission is present, the handshake and the payload are sent to the polling server (60). If the call fails more than the Reg Fail count value, the alarm device (10) tries to bring the data connection back up, by either attempting to reconnect with the polling server (60) or refreshing the PDP context. While the recovery is in progress, the alarm device (10) should not exceed the recommended operator reattempts per minute. Once the transmission is successful, the alarm device (10) records the Bit-Error-Rate calculated from the last transmission. The BER is also saved in the network table (404) along with the rest of the data describing the surrounding network topology.

Referring to figure 10, the process of sending a poll and/or an alarm starts at step (1010), and progresses to step (1020) where the handshake process to and from the polling server (60) is carried out. At step (1030) the connection manager (2) determines if transmission has been successful, which if it has the process moves to step (1090) where the BER is recorded at the process ends at step (1100). If at step (1030) it was determined that transmission has not been successful, the process moves to step (1040) which is determined if the number of polls is less than or equal to the Reg Fail Count value, and if not the process moves to step (1050) where a jump to decision is made, discussed in relation to figure 7, after which the process stops at step (1060). At step (1040) if it was determined that the number of heartbeat polls, and an associated failed handshake return, was less than the Reg Fail Count value the process moves to step (1070) where the connection manager (2) determines if the radio module (403) is operating within recommended timings as required by the network operator, and if not the process returns to step (1020), whilst if timings are within bounds the process moves to step (1080) where refresh PDP is carried out as discussed with respect to figure 9 starting from step (910). Following step (1080) the process returns to step (1020).

In an alternative embodiments to that shown in figure 1b, an interface device (15) is interposed between the alarm device (10) and a radio network (30) [as shown in figure 1a], and/or an interface device (15) is interposed to the alarm device (10) and a PSTN (20). In these alternative further embodiments the interface device (15) provides for communication between the alarm device (10) and a remote receiving device over the radio network (30) and/or PSTN (20) and accounts for unpredictable end-to-end transmission delays, which otherwise for communication in accordance with the DTMF Fast Format protocol would lead to transmission errors. The operation of an interface device (15) within an alarm signalling system (1) comprising at least part of a PSTN has been described in patent GB2465833B, to the present applicants which is incorporated by reference. The skilled person will understand that interface device (15) that provides for communication over a PSTN (20) in accordance with the DTMF Fast Format protocol, can be modified to provide for communication over a radio network (30) in accordance with the DTMF Fast Format through provision of a radio module and antenna and associated electronics processing for radio transmission in accordance with the DTMF Fast Format.

The interface device (15) as discussed in these alternative and further alternative embodiments will not here be discussed further, and the skilled person is directed to the teaching in GB2465833B to the present applicants in order to implement such interface device (15) within these embodiments.

In a further alternative embodiment, where the alarm device (10) is retrofitted to a further alarm device (450), alarm messages are sent from the further alarm device (450) to an ARC via a communication connection provided by the radio network (30) or by the PSTN (20).

In the case that the information indicates that an alarm condition has been met and either one of the alarm gateway (70), the primary polling server (60), or operations centre (80) is the final destination for the information, the one of the alarm gateway (70), the primary polling server (60), or operations centre (80) forwards the information to the ARC (50). As before, the ARC (50) can then inform the appropriate responsible person in order that they may take action.

The alarm device (10) can be a fire alarm unit, a commercial or domestic intruder alarm unit, a personal alarm unit, or a medical device such as used for dispersed alarms and/or personal communicators,. The skilled person will appreciate, that the alarm device (10) can be used in other alarm, security, health or other critical information reporting situations.

Features of the embodiments described and shown in the Figures can be combined in any combination, as would be understood by the skilled reader as being practicable

The scope of the present disclosure is not intended to be limited to any particular described embodiment but instead is defined by the attached claims.

**Claims**

1. A method of operating an alarm device (10) arranged to transmit an alarm signal indicative of an alarm condition having been met, the method comprising the steps of the device (10):

   accessing a record of a network table of cellular networks (404) available to the device (10) for communication therewith, the record comprising information identifying each of the networks and a measure of the reliability of communication over each network, wherein upon the device (10) determining that the measure of the reliability of communication to a network to which the device has established a communications link has dropped below a predetermined level, ending that communications link, wherein the measure of the reliability of communication over each network comprises a Cell Signal Quality "CSQ" value;
   selecting another network with which to establish a communication link, that other network being the network for which the measure of the reliability of communication is the next highest on the network table (404); and attempting to establish a communications link with the selected network;
   wherein the network table is sorted on the basis of Cell Signal Quality "CSQ", cell number "Cell", and Bit Error Rate "BER" according to:

$$(CSQ \times K_{csq}) + (Cell \times K_{cell}) + (BER \times K_{ber});$$

   where $K_{csq}$, $K_{cell}$ and $K_{ber}$ are coefficients associated with the parameters CSQ, Cell and BER, and are provided remotely from an operations centre (80).

2. A method according to claim 1 and comprising the step of the device (10) carrying out a survey of cellular networks available to the device for communication therewith so as to populate the network table with the information contained therein.

3. A method according to claim 2, wherein the survey is carried out on power-up of the device (10), in response to a signal received at the device from a remote location, on a predetermined schedule or in response to a manual input at the device (10) from a user.

**4.** A method according to claim 1, wherein the determining is based on an updated measure of the reliability of communication over the network to which the device (10) has established a communications link, the updated measure obtained during communication over that established link.

**5.** A method according to claim 4, wherein the determining is based on determining that a predetermined number of updated measures are below the predetermined level.

**6.** A method according to claim 5, wherein the communication over the established link by which the updated measure is obtained comprises the device (10) sending a periodic polling signal from the device to a remote location and the device (10) receiving from the remote location a handshake signal indicative of the polling signal having been received at the remote location.

**7.** A method according to claim 6, wherein upon not receiving an expected handshake, ending the established link and selecting another network to connect to, that other network being the network for which the measure of the reliability of communication is the next highest.

**8.** A method according to any preceding claim, wherein upon the device having established a communications link over a network that is not a predetermined preferred network, periodically ending that link and attempting to establish a link over the preferred network if the measure of reliability of communication over that preferred network is greater than the predetermined level.

**9.** A method according to claim 8, wherein after ending the link, the device (10) attempts to connect to the predetermined preferred network if the measure of reliability of communication over that preferred network is greater than the predetermined level.

**10.** A method according to any preceding claim, wherein the method comprises the device (10) making no more than a predetermined number of repeated attempts to connect to the selected network if previous attempts to connect to the selected network fail.

**11.** A method according to any preceding claim and comprising the step of, upon ending a communications link over a network, the device (10) acting on a signal that it is to be locked to a particular network by attempting to establish a communications link with that network and not attempting to establish a communications link with another network at least until a contrary signal is received.

**12.** An alarm device (10) having means adapted to carry out the method of any one of the preceding claims.

**13.** An alarm device (10) according to claim 12 and arranged for coupling to an alarm signal generating device (60) for receiving an alarm signal therefrom and for communicating the alarm signal over a cellular network with which the alarm device (10) has established a communications link.

**14.** Computer-readable media comprising code portions executable by processing means of an alarm device (10) to cause that device to carry out a method according to any of claim 1 to claim to claim 11.

**Patentansprüche**

**1.** Verfahren zum Betreiben einer Alarmvorrichtung (10), die dazu ausgelegt ist, ein Alarmsignal zu übertragen, das indikativ für das Vorliegen eines Alarmzustands ist, wobei das Verfahren die folgenden Schritte der Vorrichtung (10) umfasst:

Zugreifen auf einen Datensatz einer Netzwerktabelle von Mobilfunknetzen (404), die für die Vorrichtung (10) zur Kommunikation damit verfügbar sind, wobei der Datensatz Informationen umfasst, die jedes der Netzwerke und ein Maß der Zuverlässigkeit der Kommunikation über jedes Netzwerk identifiziert,

wobei die Vorrichtung (10), nachdem sie bestimmt hat, dass das Maß der Zuverlässigkeit der Kommunikation zu einem Netzwerk, mit dem die Vorrichtung eine Kommunikationsverbindung hergestellt hat, unter ein vorbestimmtes Niveau abgefallen ist, diese Kommunikationsverbindung beendet,
wobei das Maß der Zuverlässigkeit der Kommunikation über jedes Netzwerk einen Cell Signal Quality "CSQ"-Wert umfasst;

Auswählen eines anderen Netzwerks, mit dem eine Kommunikationsverbindung herzustellen ist, wobei das andere Netzwerk das Netzwerk ist, für welches das Maß der Zuverlässigkeit der Kommunikation das nächst höchste auf der Netzwerktabelle (404) ist; und

Versuchen, eine Kommunikationsverbindung mit dem ausgewählten Netzwerk herzustellen;

wobei die Netzwerktabelle auf der Basis von Cell Signal Quality "CSQ", Zellennummer "Cell" und Bit Error Rate "BER" gemäß der folgenden Formel sortiert wird:

$$(CSQ \times K_{csq}) + (Cell \times K_{cell}) + (BER \times K_{ber});$$

wobei $K_{csq}$, $K_{cell}$ und $K_{ber}$ Koeffizienten sind, die mit den Parametern CSQ, Cell und BER verbunden sind, und die von dem Remote-Standort aus von einem Betriebszentrum (80) bereitgestellt werden.

2. Verfahren gemäß Anspruch 1, das den folgenden Schritt der Vorrichtung (10) umfasst: Ausführen einer Untersuchung von Mobilfunknetzen, die für die Vorrichtung zur Kommunikation damit verfügbar sind, um die Netzwerktabelle mit den darin enthaltenen Informationen zu füllen.

3. Verfahren gemäß Anspruch 2, wobei die Untersuchung beim Einschalten der Vorrichtung (10) in Reaktion auf ein Signal ausgeführt wird, das an der Vorrichtung von einem Remote-Standort aus empfangen wird, nach einem vorbestimmten Zeitplan oder in Reaktion auf eine an der Vorrichtung (10) von einem Benutzer vorgenommene manuelle Eingabe.

4. Verfahren gemäß Anspruch 1, wobei das Bestimmen auf einem aktualisierten Maß der Zuverlässigkeit der Kommunikation über das Netzwerk basiert ist, mit dem die Vorrichtung (10) eine Kommunikationsverbindung hergestellt hat, wobei das aktualisierte Maß während der Kommunikation über diese hergestellte Verbindung erhalten wird.

5. Verfahren gemäß Anspruch 4, wobei das Bestimmen auf dem Bestimmen basiert, dass eine vorbestimmte Anzahl von aktualisierten Maßen unter dem vorbestimmten Niveau liegt.

6. Verfahren gemäß Anspruch 5, wobei die Kommunikation über die hergestellte Verbindung, durch die das aktualisierte Maß erhalten wird, das Senden, durch die Vorrichtung (10), eines periodischen Abfragesignals von der Vorrichtung zu einem Remote-Standort und das Empfangen, durch die Vorrichtung (10), von dem Remote-Standort eines Handshakesignals umfasst, das indikativ dafür ist, dass das Abfragesignal an dem Remote-Standort empfangen worden ist.

7. Verfahren gemäß Anspruch 6, wobei, nachdem ein erwarteter Handshake nicht empfangen worden ist, die hergestellte Verbindung beendet und ein anderes Netzwerk zur Herstellung einer Verbindung ausgewählt wird, wobei das andere Netzwerk das Netzwerk ist, für welches das Maß der Zuverlässigkeit der Kommunikation das nächst höchste ist.

8. Verfahren gemäß einem beliebigen vorhergehenden Anspruch, wobei, nachdem die Vorrichtung eine Kommunikationsverbindung über ein Netzwerk hergestellt hat, das nicht ein vorbestimmtes bevorzugtes Netzwerk ist, diese Verbindung periodisch beendet wird und versucht wird, eine Verbindung über das bevorzugte Netzwerk herzustellen, falls das Maß der Zuverlässigkeit der Kommunikation über das bevorzugte Netzwerk größer als das vorbestimmte Niveau ist.

9. Verfahren gemäß Anspruch 8, wobei nach dem Beenden der Verbindung die Vorrichtung (10) versucht, eine Verbindung mit dem vorbestimmten bevorzugten Netzwerk herzustellen, falls das Maß der Zuverlässigkeit der Kommunikation über das bevorzugte Netzwerk größer als das vorbestimmte Niveau ist.

10. Verfahren gemäß einem beliebigen vorhergehenden Anspruch, wobei das Verfahren das Durchführen, durch die Vorrichtung (10), von nicht mehr als einer vorbestimmten Anzahl von wiederholten Versuchen der Herstellung einer Verbindung mit dem ausgewählten Netzwerk umfasst, falls vorherige Versuche der Herstellung einer Verbindung mit dem ausgewählten Netzwerk fehlschlagen.

11. Verfahren gemäß einem beliebigen vorhergehenden Anspruch, das nach dem Beenden einer Kommunikationsverbindung über ein Netzwerk den folgenden Schritt umfasst: Reagieren der Vorrichtung (10) auf ein Signal, das mit einem bestimmten Netzwerk zu verriegeln ist, durch Versuchen der Herstellung einer Kommunikationsverbindung mit einem Netzwerk und Nichtversuchen der Herstellung einer Kommunikationsverbindung mit einem anderen Netzwerk, zumindest bis ein gegenteiliges Signal empfangen wird.

12. Alarmvorrichtung (10), die Mittel aufweist, die dazu ausgelegt sind, das Verfahren nach einem der vorhergehenden Ansprüche auszuführen.

13. Alarmvorrichtung (10) gemäß Anspruch 12, die dazu ausgelegt ist, mit einer Alarmsignal-Erzeugungsvorrichtung (60) gekoppelt zu werden, um ein Alarmsignal davon zu empfangen und das Alarmsignal über ein Mobilfunknetz zu übermitteln, mit dem die Alarmvorrichtung (10) eine Kommunikationsverbindung hergestellt hat.

14. Computerlesbares Medium, das Codeteile enthält, die durch eine Verarbeitungseinrichtung einer Alarmvorrichtung (10) ausführbar sind, um die Vorrichtung zu veranlassen, ein Verfahren gemäß einem der Ansprüche von Anspruch 1 bis Anspruch 11 auszuführen.

**Revendications**

1. Procédé d'exploitation d'un dispositif d'alarme (10) agencé pour transmettre un signal d'alarme indiquant qu'une condition d'alarme a été remplie, le procédé comprenant les étapes du dispositif (10) consistant à :

accéder à un enregistrement d'une table de réseau de réseaux cellulaires (404) à la disposition du dispositif (10) pour une communication avec celui-ci, l'enregistrement comprenant des informations identifiant chacun des réseaux et une mesure de la fiabilité de communication sur chaque réseau, dans lequel, lorsque le dispositif (10) a déterminé que la mesure de la fiabilité de communication avec un réseau avec lequel le dispositif a établi une liaison de communication est tombée au-dessous d'un niveau prédéterminé, terminer cette liaison de communication, la mesure de la fiabilité de communication sur chaque réseau comprenant une valeur de qualité de signal de cellule « CSQ » ;
sélectionner un autre réseau avec lequel il convient d'établir une liaison de communication, cet autre réseau étant le réseau pour lequel la mesure de la fiabilité de communication est la plus élevée dans la table de réseau (404) ; et
tenter d'établir une liaison de communication avec le réseau sélectionné ;
dans lequel la table de réseau est triée sur la base de la qualité de signal de cellule « CSQ », du numéro de cellule « Cell », et du taux d'erreur binaire « BER » selon :

$$(CSQ \times K_{csq}) + (Cell \times K_{cell}) + (BER \times K_{ber}) ;$$

où $K_{csq}$, $K_{cell}$ et $K_{ber}$ sont des coefficients associés aux paramètres CSQ, Cell et BER, et sont fournis à distance depuis un centre d'exploitation (80).

2. Procédé selon la revendication 1 et comprenant l'étape dans laquelle le dispositif (10) effectue un relevé des réseaux cellulaires à la disposition du dispositif pour une communication avec celui-ci afin d'alimenter la table de réseau avec les informations contenues dans celui-ci.

3. Procédé selon la revendication 2, dans lequel le relevé est effectué à la mise sous tension du dispositif (10), en réponse à un signal reçu au niveau du dispositif depuis un emplacement distant, selon un planning prédéterminé ou en réponse à une entrée manuelle de la part d'un utilisateur au niveau du dispositif (10).

4. Procédé selon la revendication 1, dans lequel la détermination est basée sur une mesure mise à jour de la fiabilité de communication sur le réseau avec lequel le dispositif (10) a établi une liaison de communication, la mesure mise à jour étant obtenue pendant une communication sur cette liaison établie.

5. Procédé selon la revendication 4, dans lequel la détermination est basée sur la détermination qu'un nombre prédéterminé de mesures mises à jour est inférieur au niveau prédéterminé.

**6.** Procédé selon la revendication 5, dans lequel la communication sur la liaison établie, par laquelle la mesure mise à jour est obtenue comprend le fait que le dispositif (10) envoie un signal d'interrogation périodique du dispositif à un emplacement distant, et le fait que le dispositif (10) reçoit un signal de contrôle de flux de l'emplacement distant qui indique que le signal d'interrogation a été reçu à l'emplacement distant.

**7.** Procédé selon la revendication 6, dans lequel, quand aucun contrôle de flux attendu n'est reçu, la liaison établie est terminée et un autre réseau est sélectionné pour une connexion à celui-ci, cet autre réseau étant le réseau pour lequel la mesure de la fiabilité de communication est la deuxième la plus élevée.

**8.** Procédé selon l'une quelconque des revendications précédentes, dans lequel, lorsque le dispositif a établi une liaison de communication sur un réseau qui n'est pas un réseau préféré prédéterminé, cette liaison est terminée périodiquement, et on tente d'établir une liaison sur le réseau préféré si la mesure de fiabilité de communication sur ce réseau préféré est supérieure au niveau prédéterminé.

**9.** Procédé selon la revendication 8, dans lequel, après avoir terminé la liaison, le dispositif (10) tente de se connecter au réseau préféré prédéterminé si la mesure de fiabilité de communication sur ce réseau préféré est supérieure au niveau prédéterminé.

**10.** Procédé selon l'une quelconque des revendications précédentes, dans lequel le procédé comprend le fait que le dispositif (10) n'effectue pas plus qu'un nombre prédéterminé de tentatives répétées pour se connecter au réseau sélectionné si des tentatives précédentes de se connecter au réseau sélectionné ont échoué.

**11.** Procédé selon l'une quelconque des revendications précédentes et comprenant, lorsqu'une liaison de communication sur un réseau est terminée, l'étape dans laquelle le dispositif (10) agit suite à un signal indiquant qu'il doit se caler sur un réseau particulier en tentant d'établir une liaison de communication avec ce réseau et en ne tentant pas d'établir une liaison de communication avec un autre réseau au moins jusqu'à ce qu'un signal contraire soit reçu.

**12.** Dispositif d'alarme (10) comportant des moyens adaptés pour effectuer le procédé selon l'une quelconque des revendications précédentes.

**13.** Dispositif d'alarme (10) selon la revendication 12 et agencé pour être couplé à un dispositif de génération de signal d'alarme (60) pour recevoir un signal d'alarme de celui-ci et pour communiquer le signal d'alarme sur un réseau cellulaire avec lequel le dispositif d'alarme (10) a établi une liaison de communication.

**14.** Support lisible par ordinateur, comprenant des parties de code exécutables par des moyens de traitement d'un dispositif d'alarme (10) afin d'amener ce dispositif à effectuer un procédé selon l'une quelconque des revendications 1 à 11.

Fig. 1a

EP 3 127 373 B1

Fig. 1b

2

40

42

Embedded
Device

GPRS/3G ——— INTERNET

30

10

44

GPRS/GSM

Connection manager

## Fig. 2a

2

40

10

Embedded
Device

GPRS/3G ——— INTERNET

44

Connection manager

## Fig. 2b

3

25,35,42,44

Embedded
Device

Any
Path

10

20,30,40

60

Pulse manager

## Fig. 3a

3

40

Embedded
Device

Any
Path

60

42

25

10

Pulse manager

## Fig. 3b

Fig. 4

EP 3 127 373 B1

2.1

```
      ┌─────────┐
      │  Start  │
      └─────────┘
           │
           ▼
    ┌──────────────┐  510
    │   Power up   │
    └──────────────┘
           │
           ▼
   ╱───────────────╲  520
  ╱  Last network   ╲
 ◁   available?      ▷── N
  ╲                 ╱
   ╲───────────────╱
           │ Y          530
           ▼
┌──────────────────┐  ┌──────────────────┐
│Register to a     │  │Register to network│
│network           │  │(Manual mode)      │
│(Automatic mode)  │  └──────────────────┘
└──────────────────┘
      540

            ┌──────────────┐  550
            │    Checks     │
            └──────────────┘
                   │
                   ▼
            ┌──────────────┐
            │  Other tasks  │
            └──────────────┘
                      560
```

Fig. 5

2.2

Fig. 6

2.3

Fig. 7

2.4

Do survey 810

Radio module survey 820

Populate table 830

Return

840

Fig. 8

2.5

Refresh PDP 910

Detach/deactivate
PDP context

920

Attach/activate
PDP context

930

Return

940

Fig. 9

2.6

Fig. 10

| RSSI | % of RSSI | Signal in dBm | 2G | 3G | Network Property |
|------|-----------|---------------|------|------|------------------|
| 0 | 0 | -113 | Unusable | Unusable | None |
| 1 | 3 | -111 | Unusable | Unusable | |
| 2 | 6 | -109 | Unusable | Unusable | |
| 3 | 10 | -107 | Unusable | Unusable | |
| 4 | 13 | -105 | SMS only | Unusable | |
| 5 | 16 | -103 | SMS only | Unusable | |
| 6 | 19 | -101 | SMS only | Unusable | |
| 7 | 23 | -99 | Poor | Poor | Heterogeneous |
| 8 | 26 | 97 | Poor | Poor | |
| 9 | 29 | -95 | Poor | Poor | |
| 10 | 32 | -93 | Poor | Poor | |
| 11 | 35 | -91 | Poor | Poor | |
| 12 | 39 | -89 | OK | OK | |
| 13 | 42 | -87 | OK | OK | |
| 14 | 45 | -85 | OK+ | OK | |
| 15 | 48 | -83 | OK+ | OK+ | |
| 16 | 52 | -81 | OK+ | OK+ | |
| 17 | 55 | -79 | OK+ | Best | Homogeneous |
| 18 | 58 | -77 | Best | Best | |
| 19 | 61 | -75 | Best | Best | |
| 20 | 65 | -73 | Best | Best | |
| 21 | 68 | -71 | Best | Best | |
| 22 | 71 | -69 | Best | Best | |
| 23 | 74 | -67 | Best | Best | |
| 24 | 77 | -65 | Best | Best | |
| 25 | 81 | -63 | Best | Best | |
| 26 | 84 | -61 | Best | Best | |
| 27 | 87 | -59 | Best | Best | |
| 28 | 90 | -57 | Best | Best | |
| 29 | 94 | -55 | Best | Best | |
| 30 | 97 | -53 | Best | Best | |
| 31 | 100 | -51< | Best | Best | |

Fig. 11

**EP 3 127 373 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2465833 A
- WO 2011078634 A

- GB 2465833 B